**Europäisches Patentamt**

**European Patent Office**

**Office européen des brevets**

(11) Veröffentlichungsnummer: **0 139 098**
**B1**

(12) **EUROPÄISCHE PATENTSCHRIFT**

(45) Veröffentlichungstag der Patentschrift:
21.09.88

(21) Anmeldenummer: 84107993.2

(22) Anmeldetag: 07.07.84

(51) Int. Cl.⁴: **B 29 C 45/80**

(54) Formschliesseinheit einer Spritzgiessmaschine.

(30) Priorität: **03.08.83 DE 3327936**

(43) Veröffentlichungstag der Anmeldung:
**02.05.85 Patentblatt 85/18**

(45) Bekanntmachung des Hinweises auf die Patenterteilung:
**21.09.88 Patentblatt 88/38**

(84) Benannte Vertragsstaaten:
**AT CH FR GB IT LI NL**

(56) Entgegenhaltungen:
**US-A-3 728 057**
**US-A-4 005 974**
**US-A-4 029 457**

(73) Patentinhaber: **KLÖCKNER- WERKE
AKTIENGESELLSCHAFT, Klöcknerstrasse 29,
D-4100 Duisburg 1 (DE)**

(72) Erfinder: **Gutjahr, Lothar, Junkerfeldele 1, D-7809
Denzlingen (DE)**

(74) Vertreter: **Kiefer, Winfried, Dipl.- Phys., Klöckner-
Werke Aktiengesellschaft Patentabteilung
Klöcknerstrasse 29, D-4100 Duisburg 1 (DE)**

## Beschreibung

Die Erfindung betrifft eine Formschließeinheit einer Spritzgießmaschine mit mindestens einem hydraulischen Fahrzylinder und mindestens einem hydraulischen Formzuhaltezylinder für die auf Holmen geführte verschiebbare Formaufspannplatte mit der einen Hälfte einer geteilten Spritzgießform, deren andere Hälfte auf einer feststehend angeordneten Formaufspannplatte angeordnet ist, wobei das Volumen des Formnestes (der Formnester) am Anfang der Formfüllphase größer ist als am Ende der Formfüllphase.

Formschließeinheiten dieser Art sind an sich bereits bekannt. (Plastverarbeiter, "Fortschritte im Spritzgießen", September 1966, 17. Jahrgang, Seite 542 ff). Während des Injizierens des plastifizierten Materials ist das Volumen des Formnestes bzw. der Formnester größer als während der Nachdruckphase. Durch diese Maßnahme wird die Qualität der hergestellten Spritzteile erheblich gesteigert.

Probleme ergeben sich vor allem dadurch, daß die Vorgabe des vergrößerten Volumens des Formnestes es erfordert, daß die verschiebbare Formhälfte eine genau definierte Position zur feststehenden Formhälfte einnehmen muß. Die hierbei auftretenden Schwierigkeiten konnten bisher nur zum Teil mit einem erheblichen Aufwand bezüglich der hydraulischen Schaltung erreicht werden. So muß beispielsweise die Holmendehnung berücksichtigt werden, die von der Betriebstemperatur abhängig ist und den Abstand der verschiebbaren Formhälfte in ihrer Zwischenstellung zur feststehenden Formhälfte beeinflußt. Weiterhin baut sich während des Einspritzens des plastifizierten Materials in der Form ein Druck auf, dem mittels des Formzuhaltedrucks, der ausgeübt wird mittels des Formzuhaltezylinders, entgegengewirkt wird. Probleme ergeben sich vor allem darin, daß durch die sich ändernden Betriebstemperaturen auch die Viskosität der hydraulischen Flüssigkeit sich ändert und somit die Kompressibilität beeinflußt. Hinzu tritt noch, daß in der Praxis es nicht möglich ist, die hydraulische Flüssigkeit frei von Lufteinschlüssen, d. h. allgemein von Gasen freizuhalten, die dazu führen, daß bei höheren Betriebstemperaturen sich in der hydraulischen Flüssigkeit Gasblasen bilden, die das Einhalten der verschiebbaren Formhälfte in ihrer Zwischenstellung ebenfalls wesentlich beeinflussen. Es wurden in dieser Hinsicht eine Vielzahl von Lösungen gefunden, die alle darauf hinauslaufen, mittels des Druckes des Fahrzylinders und/oder des Formzuhaltezylinders diese Zwischenstellung der verschiebbaren Formaufspannplatte genau einzuhalten, was aus den oben dargelegten Gründen bisher noch nicht zufriedenstellend gelöst ist.

Der Erfindung liegt die Aufgabe zugrunde, Formschließeinheiten der eingangs genannten Art derart auszubilden, daß das Anfahren oder Zwischenstellung der verschiebbaren Formaufspannplatte unabhängig von Holmendehnungen, Einflüssen der Betriebstemperatur auf die hydraulische Flüssigkeit usw. ist und darüber hinaus eine bedeutend höhere Genauigkeit der Positionierung bei gleichzeitiger Verfügbarkeit der teilweisen oder vollen Schließkraft zuläßt.

Diese Aufgabe wird erfindungsgemäß dadurch gelöst, daß eine Gewindespindel mit der verschiebbaren Formaufspannplatte über eine Spindelmutter in Eingriff steht und in der feststehend angeordneten Formaufspannplatte verdrehbar gelegert und mit einem Schrittmotor gekoppelt ist, daß in der Zuflußleitung zum hydraulischen Fahrzylinder ein 4/2-Wegeventil angeordnet ist, und der Ventilkörper des 4/2-Wegeventils auf der Gewindespindel axial verschiebbar angeordnet ist, und daß der Schrittmotor in Abhängigkeit eines vorgegebenen Geschwindigkeits- und/oder Druckverlaufs als Funktion des Abstandes der Formhälften bzw. der Formaufspannplatten steuerbar ist und daß das hydraulische Arbeitsfür den Fahrzylinder über ein weiteres Wegeventil dem Formzuhaltezylinder derart aufschaltbar ist, daß die resultierenden Kräfte des Fahrzylinders und des Formzuhaltezylinders dem jeweiligen Einspritzdruck in der Form bei teilweise geöffnetem Zustand mit einer Gegenkraft bis hin zur vollen Zuhaltekraft entgegenwirken.

Vorzugsweise kommt eine Steilgewindespinel zum Einsatz.

Durch diese Maßnahme wird erreicht, daß die Zwischenstellung der verschiebbaren Formaufspannplatte unabhängig von Holmendehnungen und vom Druck im hydraulischen Arbeitsmedium ist, so daß auch bei stark schwankenden Betriebstemperaturen die verschiebbare Formaufspannplatte exakt in der Zwischenstellung verfahrbar ist. Der Schrittmotor wird hierbei in Abhängigkeit eines vorgegebenen Geschwindigkeits- und/oder Druckverlaufs als Funktion des Abstands der Formhälften bzw. der Formaufspannplatten gesteuert. Dies hat zur Folge, daß der Motor die Gewindespinel dreht, wobei gleichzeitig der Ventilkörper des 4/2-Wegeventils entsprechend verschoben wird und einen mehr oder weniger großen Durchflußquerschnitt für das hydraulische Arbeitsmittel zum Fahrzylinder bzw. Formzuhaltezylinder freigibt, so daß der Fahrzylinder bzw. Formzuhaltezylinder entsprechend beaufschlagt wird und die verschiebbare Formaufspannplatte eine entsprechende Bewegung ausführt. Dies hat wiederum eine entsprechende gegenläufige Verschiebung des Ventilkörpers zur Folge, der wiederum durch den Schrittmotor entsprechend dem vorgegebenen Druck- und/oder Geschwindigkeitsverlauf entgegengewirkt wird. Es entsteht auf diese Weise ein hydraulisch zurückgekoppelter starrer Regelkreis, der zur Folge hat, daß mit beliebiger Genauigkeit, die im wesentlichen von der Genauigkeit der Spindel und der Auflösung des Schrittmotors abhängt, die Bewegung der verschiebbaren Formaufspannplatte und damit der verschiebbaren Formhälfte gesteuert wird.

Nach diesem Prinzip der hydraulisch starren Rückkopplung arbeitende hydraulische Bauelemente sind an sich bereits bekannt (Prospekt der Firma Hartmann und Lämmle KG; Elektrohydraulischer Linearverstärker LVS, Ausgabe 10, 1977). Derartige Bauelemente wurden bisher lediglich dadurch verwendet, um zum Beispiel an Werkzeugmaschinen verschiebbare Maschinenteile exakt zu positionieren. Die Fachwelt hat jedoch bislang nie daran gedacht, dieses Prinzip in Formschließeinheiten für Spritzgießmaschinen zu integrieren, um den bisher erheblichen hydraulischen Schaltungsaufwand zu reduzieren und um die oben dargelegten Nachteile zu beheben.

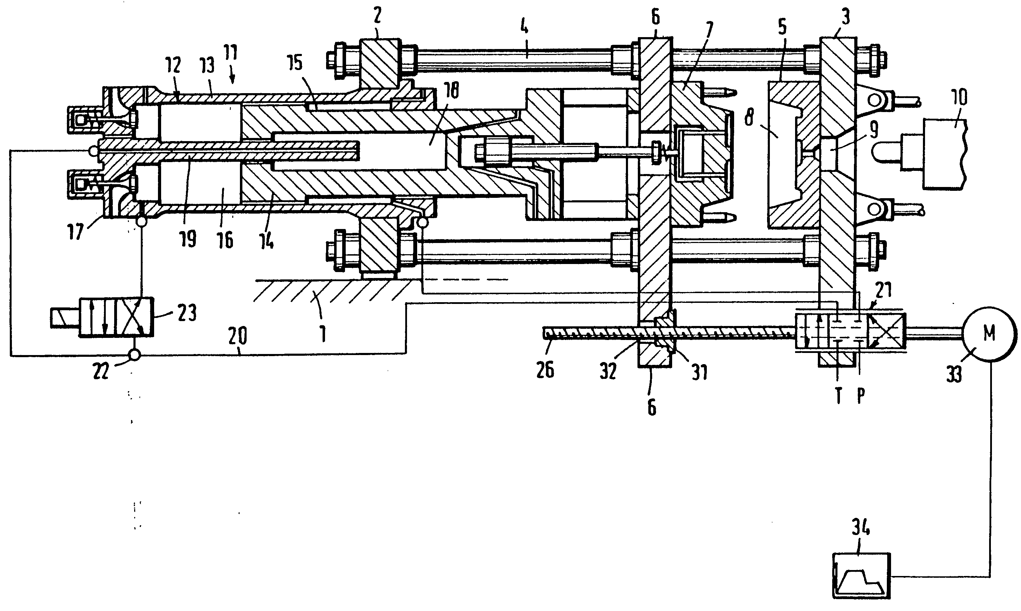

Die Erfindung ist in der Zeichnung anhand eines Ausführungsbeispieles erläutert:

Die Zeichnung zeigt eine Spritzgießmaschine in Seitenansicht (Ausschnitt), wobei die Schließeinheit im Schnitt dargestellt ist. Die Spritzgießmaschine besteht aus den beiden auf einem Maschinenbett 1 feststehend angeordneten Ständerplatten 2 und 3, die durch vier Holme 4 miteinander verbunden sind. Die Ständerplatte 3 bildet die feststehende Formaufspannplatte, auf der die eine Hälfte 5 einer geteilten Spritzgießform aufgespannt ist. Die andere mit 7 bezeichnete verschiebbare Formhälfte ist auf der verschiebbaren Formaufspannplatte 6 aufgespannt. In der Zwischenstellung umschließen die beiden Formhälften in an sich bekannter Weise das Formnest 8, in das über die Angußbohrung 9 mittels des schematisch (im Ausschnitt) dargestellten Spritzaggregats 10 die plastifizierte Masse eingespritzt wird. Die verschiebbare Formaufspannplatte weist auf ihrer von der Form abgewandten Seite die Schließeinheit 11 auf. Sie weist einen Formzuhaltezylinder 12 auf, dessen Zylinder 13 in der Ständerplatte 2 feststehend angeordnet ist. Sein Kolben 14 ist unter der Ausbildung der Druckräume 15 und 16 beidseitig beaufschlagbar. Die Kolbenstange dieses Kolbens ist mit der verschiebbaren Formaufspannplatte verbunden. Sie ist weiterhin unter Bildung des Druckraums 18 hohl ausgebildet, in den teleskopartig ein rohrartiges Rundprofil 19 eintaucht. Dieses Rundprofil 19 ist fest mit der Stirnplatte 17 des Zylinders 13 verbunden und weist einen Anschluß für eine Druckleitung 20 auf, die mit dem 4/2-Wegeventil 21 verbunden ist, über das ein hydraulisches Arbeitsmittel zu- und abgeführt werden kann. Der Kolben 14, die Kolbenstange und das rohrartige Rundprofil 19 bilden den Fahrzylinder. An dem Abzweig 22 in der Zuflußleitung zwischen dem Anschluß des Fahrzylinders und dem 4/2-Wegeventil ist ein weiteres Wegeventil 23 angeordnet, das mit dem Druckraum 12 des Formschließzylinders verbunden ist. Der Ventilkörper des Wegeventils 21 ist auf einer Gewindespindel 26, die durch das Gehäuse dieses Wegeventils geführt ist, in axialer Richtung der Gewindespindel verschiebbar angeordnet. Die mit 26 bezeichnete Gewindespindel ist weiterhin mit ihrem Gewindeabschnitt durch die mit einer Spindelmutter 31 versehene Bohrung 32 hindurchgeführt und ist weiterhin mit dem Schrittmotor 33 gekoppelt, der nach einem vorgegebenen Programm in Abhängigkeit der Geschwindigkeit bzw. und/oder des Druckes als Funktion des Abstandes der beiden Formhälften bzw. der beiden Formaufspannplatten gesteuert ist. Die Werte sind in Abhängigkeit des von der verschiebbaren Formaufspannplatte zurückgelegten Weges gespeichert, dies ist schematisch durch den Speicher 34 dargestellt. Beim Zufahren der Spritzgießform wird nach Erreichen eines vorgebbaren Abstandes der verschiebbaren Formaufspannplatte von der feststehend angeordneten Formaufspannplatte diese Position gehalten und während einer vorgegebenen Zeitspanne die vorgegebene Menge von plastifiziertem Material in das zunächst vergrößerte Volumen des Formnestes injeziert. Anschließend wird die Form in ihrer Endstellung unter gleichzeitiger Anlegung des Formzuhaltedruckes verfahren. Aufgrund der ausgebildeten starren hydraulischen Rückkopplung und aufgrund der extremen Genauigkeit des Schrittmotors wird stets erreicht, daß unabhängig von Holmendehnungen, Temperaturschwankungen bzw. Viskositätsänderungen des hydraulischen Arbeitsmittels die Zwischenstellung der verschiebbaren Formhälfte erreicht und diese anschließend exakt in ihre Endposition verfahren wird. Durch das Wegeventil 23 wird bereits während dieser Positionsregelung durch Beaufschlagung mittels Druck eine hohe Haltekraft bis hin zur maximalen Formzuhaltekraft erreicht.

Die Erfindung ist sowohl beim Spritzgießen als auch beim Spritzprägen einsetzbar, d. h. beim Verarbeiten von Duroplasten bzw. von Thermoplasten und Elastomeren.

**Patentanspruch**

Formschließeinheit einer Spritzgießmaschine mit mindestens einem hydraulischen Fahrzylinder (14 - 19) und mindestens einem hydraulischen Formzuhaltezylinder (12) für die auf Holmen geführte verschiebbare Formaufspannplatte (6) mit der einen Hälfte einer geteilten Spritzgießform, deren andere Hälfte auf einer feststehend angeordneten Formaufspannplatte (3) angeordnet ist, wobei das Volumen des Formnestes (oder Formnester) zu Beginn der Formfüllphase größer ist als am Ende der Formfüllphase, dadurch gekennzeichnet, daß eine Gewindespindel (26) mit der verschiebbaren Formaufspannplatte (6) über eine Spindelmutter (31) in Eingriff steht und in der feststehend angeordneten Formaufspannplatte (3) verdrehbar gelagert und mit einem Schrittmotor (33) gekoppelt ist, daß in der Zuflußleitung (20) zum hydraulischen Fahrzylinder (14 - 19) ein 4/2-Wegeventil (21) angeordnet ist, und der Ventilkörper des 4/2-Wegeventils auf der Gewindespindel axial verschiebbar angeordnet ist, und daß der Schrittmotor in Abhängigkeit eines vorgegebenen Geschwindigkeits- und/oder Druckverlaufs als Funktion des Abstandes der Formhälften bzw. der Formaufspannplatten steuerbar ist und daß das hydraulische Arbeitsmittel für den Fahrzylinder über ein weiteres Wegeventil (23) dem Formzuhaltezylinder (12) derart aufschaltbar ist, daß die resultierenden Kräfte des Fahrzylinders und des Formzuhaltezylinders dem jeweiligen Einspritzdruck in der Form bei teilweise geöffnetem Zustand mit einer Gegenkraft bis hin zur vollen Zuhaltekraft entgegenwirken.

## Claim

Mould closing unit of an injection moulding machine with at least one hydraulic travelling cylinder (14 - 19) and at least one hydraulic mould-closing cylinder (12) for the movable mould-clamping plate (6) guided on cross-beams, with the one half of a divided injection mould, whereof the other half is located on a stationary mould-clamping plate (3), the volume of the mould recess (or mould recesses) at the beginning of the mould-filling stage being greater than at the end of the mould-filling stage, characterised in that a threaded spindle (26) is in engagement with the movable mould-clamping plate (6) by way of a spindle nut (31) and is mounted to rotate in the stationary mould-clamping plate (3) and is coupled to a stepping motor (33), that a 4/2-way direction valve (21) is located in the supply line (20) to the hydraulic travelling cylinder (14 - 19) and the valve body of the 4/2-way direction valve is arranged to be axially slidable on the threaded spindle and that the stepping motor can be controlled depending on a given speed and/or pressure variation as a function of the spacing of the mould halves or of the mould-clamping plates and that the hydraulic operating medium for the travelling cylinder can be supplied by way of a further direction valve (23) to the mould-closing cylinder (12) so that the resulting forces of the travelling cylinder and of the mould-closing cylinder oppose the respective injection pressure in the mould, in the partly open state, with an opposing force up to the full closing force.

## Revendication

Unité de fermeture de moule d'une machine à mouler par injection avec au moins un vérin hydraulique de déplacement (14 à 19) et au moins un vérin hydraulique de verrouillage de moule (12) pour le plateau de fixation de moule mobile (6) guidé sur des longerons et portant l'une des moitiés d'un moule à injection divisé dont l'autre moitié est montée sur un plateau de fixation de moule fixe (3), le volume de la cavité (ou des cavités) du moule étant plus grand au début de la phase de remplissage du moule qu'à la fin de celle-ci, caractérisée en ce qu'une broche filetée (26) coopère, par l'intermédiaire d'un écrou de broche (31), avec le plateau de fixation de moule mobile (6), qu'elle est montée de manière tournante dans le plateau de fixation de moule fixe (3) et couplée avec un moteur pas à pas (33); qu'une vanne à 4/2 voies (21) est placée dans la conduite d'arrivée (20) du vérin hydraulique de déplacement (14 à 19), le corps de la vanne à 4/2 voies étant monté sur la broche filetée de façon à pouvoir être déplacé axialement; que le moteur pas à pas peut être commandé, selon une courbe de vitesse et/ou de pression prédéterminée, en fonction de l'écartement des moitiés du moule et respectivement des plateaux de fixation du moule; et que le fluide hydraulique actif pour le vérin de déplacement peut être envoyé au vérin de verrouillage du moule (12) par l'intermédiaire d'un distributeur supplémentaire (23) de telle façon que les forces résultantes du vérin de déplacement et du vérin de verrouillage du moule s'opposent à la pression d'injection respective dans le moule, à l'état d'ouverture partielle, avec une force antagoniste pouvant atteindre la pleine force de verrouillage.

0 139 098